# EUROPÄISCHE PATENTANMELDUNG

(11) **EP 1 023 993 A2**
(43) Veröffentlichungstag der Anmeldung: **02.08.2000**
(21) Anmeldenummer: 00101159.2
(22) Anmeldetag: 21.01.2000
(51) Int. Cl.: B32B 5/26, B32B 5/28, B60R 13/08, D04H 13/00

(54) **Isolierverbundmatte**

(30) Priorität: 26.01.1999 DE 29901253 U; 26.03.1999 DE 29905570 U
(71) Anmelder: Seitz, Wilfried, 65527 Niedernhausen (DE)
(72) Erfinder: Seitz, Wilfried, 65527 Niedernhausen (DE)
(74) Vertreter: Fuchs Mehler Weiss & Fritzsche

(57) **Zusammenfassung**

Isoliermatte (4) auf der Basis von Faserstoffen, insbesondere für die Schallisolierung im Karosseriebereich von Kraftfahrzeugen, mit einer Isolierschicht (1) aus einem Baumwollfaservlies, gegebenenfalls mit einem Anteil an ausgehärtetem Kunststoffbinder, dadurch gekennzeichnet, daß sie mindestens eine weitere Isolierschicht (2) aufweist, die aus einem Vlies aus Fasern aus Mineralwolle besteht, welche einen Anteil an ausgehärtetem Kunststoffbinder enthält. Die Isoliermatte kann mit einer Kaschierung (3) aus einem flammhemmenden Gewebe versehen sein.

## Beschreibung

Die Erfindung betrifft eine Isoliermatte auf Faserstoffbasis sowie ein eine solche Isoliermatte aufweisendes Formteil.

Bisher wurden Matten für Schalldämmung überwiegend aus Baumwolle hergestellt. Zwar hat Baumwolle einen sehr hohen Absorptionskoeffizienten für Schallwellen, soll aber dieses Dämmaterial im Umfeld höherer Temperaturen eingesetzt werden, ist Baumwolle nur bedingt geeignet, da sie leicht brennbar ist. Beispielsweise bei der Schalldämmung im Karosseriebereich von Kraftfahrzeugen sind im Motorraumbereich Isoliermatten aus Baumwolle höheren Temperaturen ausgesetzt, so daß es bei ungünstigen Umständen zur Entzündung des Baumwollmaterials kommen kann.

Eine bekannte Möglichkeit, Matten für Schalldämmung im Umfeld höherer Temperaturen herzustellen, besteht darin, aufgeschäumte, nicht brennbare Werkstoffe zu verwenden. Solche Isoliermatten haben allerdings den Nachteil, daß sie bei vergleichbaren Mattendicken durchweg einen geringeren Absorptionskoeffizienten für Schall als Baumwollmatten haben.

In Bereichen, die am stärksten hohen Temperaturen ausgesetzt sind, hat man die Isoliermatten bzw. -formteile an ihrer freien Oberfläche zusätzlich mit einer Aluminiumfolie kaschiert. Eine solche Folienabdeckung kann leicht beschädigt werden, so daß an diesen Stellen das brennbare Fasermaterial freigelegt wird. Sowohl eine solche Aluminiumfolie wie auch eine dünne Gewebekaschierung, die möglicherweise entzündungshemmend ausgerüstet ist, beseitigen die Brandgefahr der Baumwolle nicht nennenswert.

Im wesentlichen aus optischen Gründen hat man Isoliermatten aus Baumwolle bisher schon mit einem meistens schwarz eingefärbten dünnen Gewebe oder Vliesstoff kaschiert, um der Matte, die üblicherweise aus zerfaserten, unterschiedlich gefärbten Baumwollabfällen hergestellt ist, ein geschlossenes und einheitliches Aussehen zu geben. Insofern eine solche dünne Gewebekaschierung ebenfalls aus brennbarem Material besteht, kann dadurch das bestehende Problem nicht gelöst werden.

Ziel der Erfindung ist daher, eine Isoliermatte bzw. ein Formteil aus einer solchen Matte zu entwickeln, die einerseits einen sehr hohen Absorptionskoeffizienten für Schall aufweist, andererseits gefahrlos auch im Umfeld höherer Temperaturen eingesetzt werden kann.

Diese Aufgabe wird für eine Isoliermatte nach dem Oberbegriff des Patentanspruches 1 durch dessen kennzeichnende Merkmale gelöst.

Die neue Isoliermatte verwendet nach wie vor Baumwollfasern, d.h. zumindest eine Schicht aus Baumwollfasern im eigentlichen Isolierkörper wegen der bekannten, positiven Eigenschaften der Baumwolle. Die eigentliche Isolierschicht ist gemäß der Erfindung jedoch als Verbundkörper bzw. als Verbundmatte ausgebildet, wobei im Sinne dieser Beschreibung der Begriff "Verbund" nur die eigentlichen Isolierschichten betreffen soll, nicht jedoch gleichzeitig dünne Kaschierungen umfassen, die beispielsweise der optischen Verbesserung und der Oberflächenausrüstung dienen.

Der Isolierverbund gemäß der Erfindung enthält eine zusätzliche Isolierschicht aus Mineralwolle. Diese Schicht ist im Einbauzustand in Bezug zur Baumwollschicht an der der hohen Temperatur ausgesetzten Seite der Isoliermatte vorzusehen. Bei einer gewissen Mindestdicke, die für eine Isolierwirkung ohnehin erforderlich ist, verhindert die Mineralwollschicht bei eventueller Feuerentwicklung im benachbarten Bereich den Flammkontakt mit der Baumwolle, so daß die Wahrscheinlichkeit von deren Entzündung maßgeblich herabgesetzt wird.

Die Mineralwolle hat den zusätzlichen Vorteil, daß sie ergänzend zur Baumwolle bevorzugt niedrige Schallfrequenzen dämpft. Um diese Wirkung auszuüben, muß die Mineralwollschicht eine gewisse Mindestdicke aufweisen. Eine Dicke ab etwa 10 mm entfaltet bereits eine akzeptable Wirkung in bezug auf Schalldämmung und Entzündungsschutz für die Baumwolle.

Mineralwollen können den Nachteil haben, daß sie wegen ihres Feinteilbestandteiles im Sinne der neuen Gefahrstoffverordnung vom Juli 1998 nicht mehr zulässig sind. Es steht jedoch eine Reihe von Glaswolltypen zur Verfügung, die auf keine gesundheitlichen Bedenken stoßen. Auch gibt es basalthaltige Mineralwollen mit Glasanteil, die der Gefahrstoffverordnung genügen und sich für den hier vorgesehenen Anwendungsfall bevorzugt eignen. Reine Glaswolle hat den Nachteil, daß sie bei bereits etwa 250°C sintert. Die erwähnte basalthaltige Mineralwolle hält höheren Temperaturen stand.

Die für die Herstellung der Isolierverbundmatte bzw. des Formteils eingesetzten Vliese bzw. Lagen aus Mineralwolle sind mit einem thermisch aushärtbaren Kunstharz imprägniert. Vorzugsweise wird die Mineralwolle unmittelbar beim Spinnvorgang mit einer Emulsion des Kunstharzes besprüht (Naßimprägnierung), was den Vorteil hat, daß beim Ablegen der Fasern zum Vlies entstehende Kreuzungspunkte bereits imprägniert sind, wodurch beim späteren Aushärten eine bessere Bindung entsteht.

Da die Kunstharzimprägnierung die Brennbarkeit erhöht, ist der Kunstharzanteil in bestimmten Grenzen zu halten, in der Regel unter 10 Gew.-%.

Der Kunstharzbinder wird bei einem Heißpreßvorgang ausgehärtet, der in der Regel erst bei Herstellung eines Formteils ausgeübt wird, wobei einerseits das Faservlies eine gewisse Gestaltsstabilisierung erhält, andererseits aber auch der Verbund zwischen den unterschiedlichen Faserstoffschichten und eventuellen Kaschierungen hergestellt bzw. verbessert wird.

Als zusätzliche brandhemmende Maßnahme kann die Isoliermatte bzw. das Formteil erfindungsgemäß mit einem ein brandhemmendes Schutzgas abgebenden Mittel ausgerüstet werden. Insoweit in die Baumwollschicht vor dem Aushärten ein pulverförmiger bzw. granulatförmiger Kunstharzbinder eingebracht wird, kann diesem ein brandhemmendes Mittel in Pulverform beigemischt werden. Zu diesem Zweck hat sich beispielsweise ein Kohlendioxidgas abgebendes Mittel, nämlich Kalk in Form von Schlämmkreide, als wirksam erwiesen. Bevorzugt werden handelsübliche Feuerlöschpulver verwendet. Bei solchen Feuerlöschpulvern findet man ebenfalls Kohlendioxidgas abgebende Mittel wie Natriumhydrogenkarbonat oder Ammoniak abgebende Pulver, wie die Ammoniumphosphate (NH₄)H₂PO₄ oder (MH₄)₂HPO₄. Natriumhydrogenkarbonat gibt bei Erhitzung neben Kohlendioxidgas auch Wasserdampf ab, der sich ebenfalls feuerhemmend auswirkt. Weitere, für Feuerlöschpulver verwendete Mittel sind KHCO₃, NaH₂PO₄, NH₄HSO₄ und (NH₄)₂SO₄. Es können auch Kombinationen dieser und anderer Mittel verwendet werden. Derartige Feuerlöschmittel werden allgemein unter der Bezeichnung ABC-Löschpulver vertrieben.

Formteile können nach dem Aushärten des Kunstharzes noch durch Zuschneiden und/oder Ausstanzen weiterverarbeitet und in die gewünschte Form gebracht werden. In einer bevorzugten Ausführungsform ist an den äußeren Rändern sowie den Rändern um Ausstanzungen zur Aufnahme von Befestigungsvorrichtungen keine Mineralwolle enthalten, so daß das Formteil dort eine geringere Dicke hat und einfacher zu befestigen ist.

Eine bevorzugte Ausführungsform der Isolierverbundmatte bzw. des Formteils besteht aus genau zwei Isolierschichten, nämlich einer Mineralwollschicht, die auf der einer Wärmequelle zugewandten Seite anzuordnen ist, und einer Baumwollschicht auf der der Wärmequelle abgewandten Seite. Vorzugsweise ist die Isolierschicht aus Mineralwolle dicker als die Isolierschicht aus Baumwolle. Für den Einsatz zur Schalldämmung im Karosseriebereich von Kraftfahrzeugen seien für die Isolierschicht aus Baumwolle Dicken von 0,5 - 1,5 cm und für die Isolierschicht aus Mineralwolle Dicken von 1,0 - 3,0 cm als beispielhaft genannt.

Nicht allein aus optischen Gründen, sondern auch als Schutz gegen Herausrieseln von Feinteilen aus der Mineralwolle ist es zweckmäßig, auch die neue Isoliermatte auf der ihre Außenseite bildenden Mineralwollschicht mit einer Kaschierung zu versehen. Diese kann aus einem möglichst flammhemmend ausgerüsteten dünnen Gewebe oder Vliesstoff bestehen, bevorzugt kann aber beispielsweise auch ein dünnes Glasfaservlies oder Glasfasergewebe verwendet werden. Eine solche Glasfaserkaschierung ist nicht eine Mineralwollschicht im Sinne der vorliegenden Erfindung.

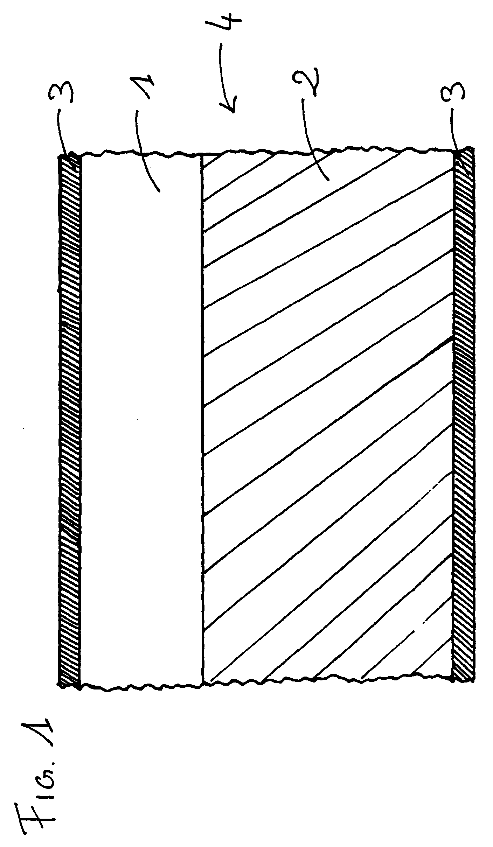

Ein bevorzugtes Ausführungsbeispiel für eine erfindungsgemäße Isoliermatte soll anhand von
Fig. 1 Querschnitt einer Isoliermatte,
erläutert werden.

Fig. 1 zeigt einen vergrößerten Querschnitt einer Isoliermatte 4, die aus zwei Isolierschichten 1, 2 besteht und von einer Kaschierung 3 umhüllt ist. Dieser spezielle Isoliermatte 4 ist besonders für den Einsatz als Schalldämmung bei Umgebungstemperaturen über 300°C geeignet.

Bei den Isolierschichten 1, 2 handelt es sich um eine 0,5 cm dicke Baumwollschicht 1, die primär der Schalldämmung dient, und einer 1,0 cm dicken Schicht aus basalthaltiger Mineralwolle 2, die die Baumwollschicht 1 vor Entflammen schützt und auch wärmeisolierende Wirkung hat. Die Baumwollschicht 1 und die basalthaltige Mineralwollschicht 2 sind beide mit Kunstharz imprägniert worden, so daß sie einen Kunstharzanteil von etwa 5 Gew.-% aufweisen. Anschließend wurden sie aufeinandergelegt und gemeinsam heißgepreßt. Dabei ist das Kunstharz ausgehärtet und die Baumwollschicht 1 und die basalthaltige Mineralschicht 2 bilden einen Verbund.

Anschließend ist der Verbund aus Baumwollschicht 1 und basalthaltiger Mineralwollschicht 2 mit einer Kaschierung 3 umhüllt worden. Da die Isoliermatte 4 bei hohen Temperaturen verwendet werden soll, wurde für die Kaschierung 3 ein flammhemmendes Gewebe gewählt, das eine Dicke von knapp 0,1 cm hat.

## Patentansprüche

1. Isoliermatte auf der Basis von Faserstoffen, insbesondere für die Schallisolierung im Karosseriebereich von Kraftfahrzeugen, mit einer Isolierschicht aus einem Baumwollfaservlies, gegebenenfalls mit einem Anteil an ausgehärtetem Kunststoffbinder, dadurch gekennzeichnet, daß sie mindestens eine weitere Isolierschicht aufweist, die aus einem Vlies aus Fasern aus Mineralwolle besteht, welche einen Anteil an ausgehärtetem Kunststoffbinder enthält.

2. Isoliermatte nach Anspruch 1, dadurch gekennzeichnet, daß der Anteil an ausgehärtetem Kunstharzbinder in der Mineralwolle 6-10 %, bezogen auf Mineralwolle, beträgt.

3. Isoliermatte nach Anspruch 1 oder 2, dadurch gekennzeichnet, daß die mindestens zwei Isolierschichten durch einen Heißpreßvorgang miteinander verbunden sind, bei dem der Kunstharzbinder ausgehärtet wurde.

4. Isoliermatte nach einem der Ansprüche 1-3, dadurch gekennzeichnet, daß sie ein brandhemmendes Zusatzmittel enthält.

5. Isoliermatte nach einem der Ansprüche 1-4, dadurch gekennzeichnet, daß sie zwei Isolierschichten aufweist.

6. Isoliermatte nach Anspruch 5, dadurch gekennzeichnet, daß die Isolierschicht aus Mineralwolle dicker ist als die Isolierschicht aus Baumwolle.

7. Isoliermatte nach Anspruch 5 oder 6, dadurch gekennzeichnet, daß die Isolierschicht aus Baumwolle eine Dicke von 0,5 bis 1,5 cm und die Isolierschicht aus Mineralwolle eine Dicke von 1-3 cm aufweist.

8. Isoliermatte nach einem der Ansprüche 5-7, dadurch gekennzeichnet, daß die Isolierschicht aus Mineralwolle an ihrer Außenseite mit einem, insbesondere schwer entflammbaren Gewebe oder Vlies kaschiert ist.

9. Isoliermatte nach einem der Ansprüche 5-8, dadurch gekennzeichnet, daß sie auf der Seite der Mineralwollschicht außen mit einer Aluminiumfolie kaschiert ist.

10. Isoliermatte nach mindestens einem der Ansprüche 1-9, dadurch gekennzeichnet, daß es sich bei der Mineralwolle um Glaswolle handelt, die den Vorschriften der Gefahrstoffverordnung in der Fassung vom Juli 1998 genügt.

11. Isoliermatte nach einem der Ansprüche 1 bis 9, dadurch gekennzeichnet, daß es sich bei der Mineralwolle um eine basalthaltige Mineralwolle handelt, die den Vorschriften der Gefahrenstoffverordnung in der Fassung von Juli 1998 genügt.

12. Insbesondere flächiges Formteil aus einer Isoliermatte auf der Basis von Faserstoffen, insbesondere für die Schalldämpfung im Karosseriebereich von Kraftfahrzeugen, mit einer Isolierschicht aus einem Baumwollfaservlies, gegebenenfalls mit einem Anteil an ausgehärtetem Kunststoffbinder, dadurch gekennzeichnet, daß sie mindestens eine weitere Isolierschicht aufweist, die aus einem Vlies aus Fasern aus Mineralwolle besteht, welche einen Anteil an ausgehärtetem Kunststoffbinder enthält.

13. Formteil nach Anspruch 12, dadurch gekennzeichnet, daß der Anteil an ausgehärtetem Kunstharzbinder in der Mineralwolle 6-10 %, bezogen auf Mineralwolle, beträgt.

14. Formteil nach Anspruch 12 oder 13, dadurch gekennzeichnet, daß die mindestens zwei Isolierschichten durch einen Heißpreßvorgang miteinander verbunden sind, bei dem der Kunstharzbinder ausgehärtet wurde.

15. Formteil nach einem der Ansprüche 12-14, dadurch gekennzeichnet, daß es ein brandhemmendes Zusatzmittel enthält.

16. Formteil nach einem der Ansprüche 12-15, dadurch gekennzeichnet, daß es nach dem Aushärten durch Zuschneiden und/oder Ausstanzen weiterverarbeitet worden ist.

17. Formteil nach einem der Ansprüche 12-16, dadurch gekennzeichnet, daß an den Rändern keine Mineralwolle enthalten ist.

18. Formteil nach einem der Ansprüche 12-17, dadurch gekennzeichnet, daß sie zwei Isolierschichten aufweist.

19. Formteil nach Anspruch 18, dadurch gekennzeichnet, daß die Isolierschicht aus Mineralwolle dicker ist als die Isolierschicht aus Baumwolle.

20. Formteil nach Anspruch 18 oder 19, dadurch gekennzeichnet, daß die Isolierschicht aus Baumwolle eine Dicke von 0,5 bis 1,5 cm und die Isolierschicht aus Mineralwolle eine Dicke von 1 bis 3 cm aufweist.

21. Formteil nach einem der Ansprüche 18-20, dadurch gekennzeichnet, daß die Isolierschicht aus Mineralwolle an ihrer Außenseite mit einem insbesondere schwer entflammbaren Gewebe oder Vlies kaschiert ist.

22. Formteil nach einem der Ansprüche 18-21, dadurch gekennzeichnet, daß sie auf der Seite der Mineralwollschicht außen mit einer Aluminiumfolie kaschiert ist.

23. Formteil nach einem der Ansprüche 12-22, dadurch gekennzeichnet, daß es sich bei der Mineralwolle um Glaswolle handelt, die den Vorschriften der Gefahrstoffverordnung in der Fassung vom Juli 1998 genügt.

24. Formteil nach einem der Ansprüche 12-22, dadurch gekennzeichnet, daß es sich bei der Mineralwolle um eine basalthaltige Mineralwolle handelt, die den Vorschriften der Gefahrenstoffverordnung in der Fassung von Juli 1998 genügt.
